Europäisches Patentamt

European Patent Office

Office européen des brevets

(19)

(11) Veröffentlichungsnummer : **0 342 471 B1**

(12) **EUROPÄISCHE PATENTSCHRIFT**

(45) Veröffentlichungstag der Patentschrift :
**29.07.92 Patentblatt 92/31**

(51) Int. Cl.⁵ : **A01N 25/18,** A01N 25/34,
A01N 59/26

(21) Anmeldenummer : **89108271.1**

(22) Anmeldetag : **09.05.89**

(54) **Verfahren zur Phosphinregelung, Schädlingsbekämpfungsmittel und dessen Verwendung.**

(30) Priorität : **14.05.88 GB 8811477
14.05.88 GB 8811476**

(43) Veröffentlichungstag der Anmeldung :
**23.11.89 Patentblatt 89/47**

(45) Bekanntmachung des Hinweises auf die
Patenterteilung :
**29.07.92 Patentblatt 92/31**

(84) Benannte Vertragsstaaten :
**AT DE ES FR GB GR**

(56) Entgegenhaltungen :
**WO-A-80/00119
DE-A- 2 746 910
DE-C- 2 825 534
FR-A- 2 452 878
GB-A- 1 543 160**

(73) Patentinhaber : **DEGESCH GmbH
Weismüllerstrasse 28-40
W-6000 Frankfurt am Main (DE)**

(72) Erfinder : **Moog, Alfons, Dr. Dipl.-Chem.
Adalbert-Stifter-Strasse 16
W-6909 Walldorf (DE)**
Erfinder : **Kapp, Wolfgang, Dr. Dipl.-Chem.
Lindenbergstrasse 5
W-8752 Laufach-Hain (DE)**

(74) Vertreter : **Weinhold, Peter, Dr. et al
Patentanwälte Dr. V. Schmied-Kowarzik
Dipl.-Ing. G. Dannenberg Dr. P. Weinhold Dr. D.
Gudel Dipl.-Ing. S. Schubert Dr. P.
BarzSiegfriedstrasse 8
W-8000 München 40 (DE)**

## Beschreibung

Die Erfindung bezieht sich auf ein Verfahren und Mittel zum Verhüten oder Verzögern der Bildung unerwünschter Phosphinkonzentrationen in einem Raum oder einer Umgebung, wobei das Phosphin von phosphinfreisetzenden Zusammensetzungen oder Verbindungen herrührt, die insbesondere hydrolysierbare Metallphosphide umfassen, indem der Beginn der Phosphinbildung verzögert und/oder das bereits freigesetzte Phosphin entfernt wird.

Es sind Schädlingsbekämpfungsmittel in fester Form bekannt, die langsam gasförmige Komponenten einschließlich Phosphin freisetzen, wenn sie der Luft ausgesetzt werden. Derartige Schädlingsbekämpfungsmittel sind z.B. geeignet, Phosphorwasserstoff aus hydrolysierbaren Erdalkali- und/oder Erdmetallphosphiden, insbesondere aus Aluminiumphosphid, Calciumphosphid und Magnesiumphosphid, zu bilden, wenn der Feuchtigkeitsgehalt der Luft oder gelagerter Güter auf sie einwirkt. Derartige Schädlingsbekämpfungsmittel werden eingesetzt z.B. zum Bekämpfen von Schädlingen, wie Käfer, Wanzen, Würmer, Schaben oder anderen Insekten und deren Eier und Larven sowie auch von Nagetieren, wie z.B. Mäuse und Ratten, z.B. in Lagerräumen, Mühlen, Schiffslagerräumen, Eisenbahnwaggons, Lastwagen, Containern, Lagerschuppen, mit Kunststoff ausgekleideten Erd-Silos und Lagerplätzen in Schuppen oder unter Planen oder in permanenten Silos für Getreide, Gemüse, Nüsse, Kakaobohnen, Tabak oder andere Nahrungsmittel oder Genußmittel, Tiernahrung und andere verarbeitete oder unverarbeitete Handelsgüter, und an anderen Orten, ob diese nun zum Lagern verwendet werden oder derartige Güter enthalten oder nicht.

Derartige phosphinfreisetzende Schädlingsbekämpfungsmittel haben in den vergangenen 10 bis 20 Jahren in immer stärkerem Maß gegenüber anderen Begasungsmitteln, wie Methylbromid, Ethylendibromid und Ethylenoxid an Bedeutung gewonnen. Gründe hierfür sind einerseits die günstigen Eigenschaften von Phosphorwasserstoff; er beeinträchtigt in keiner Weise die Qualität der meisten begasten Güter, dringt schnell ins Innere ein, im Fall von Getreide z.B. in die Körner, und zerstört dort den tierischen Organismus einschließlich aller seiner Entwicklungsstufen. Nach beendeter Begasung verflüchtigte sich das Phosphin jedoch wieder ebenso rasch durch eine Belüftung. Andererseits ist die Anwendung relativ einfach, weil die Produkte, z.B. in Form von Preßkörpern, wie Tabletten und Pellets, entweder in den Getreidefluß eingemischt oder auf dem Boden von Lagerhallen ausgebreitet werden können. Andererseits können derartige Schädlingsbekämpfungsmittel als Pulvergemisch auch in Abgabemitteln in Form von Beuteln aus Spezialpapier oder geeigneten, nicht-gewebten Stoffen (Vliesen) eingefüllt und in dieser Form in die gelagerten Güter eingeführt werden. Das Schädlingsbekämpfungsmittel muß dann den durch Hydrolyse gebildeten Phosphorwasserstoff durch die Beutelwände nach außen freisetzen. Eine Weiterentwicklung dieser Anwendungsmethode für das Begasungsverfahren verwendet ein Band aus einer Vielzahl von Taschen entweder zur direkten Aufnahme des Schädlingsbekämpfungsmittels oder vorverpackt in gesonderten Beuteln.

Das Problem der Bildung unerwünschter Phosphinkonzentrationen, das oben angesprochen wurde, entsteht z.B. im folgenden Zusammenhang:

a) bei der Herstellung, Verpackung und Lagerung phosphinfreisetzender Zusammensetzungen, insbesondere solcher auf der Basis von hydrolysierbarem Metallphosphid, z.B. Erdalkalimetallphosphiden und Erdmetallphosphiden, wie Magnesiumphosphid, Calciumphosphid und Aluminiumphosphid. Derartige Metallphosphide zur Herstellung von Marktprodukten, insbesondere Schädlingsbekämpfungsmitteln und -erzeugnissen, können zu Pulver oder Körnern verarbeitet werden, die in die oben genannten Abgabemittel abgefüllt werden, z.B. in gas- und feuchtigkeitspermeable Beutel oder bänderförmige Anordnungen aus einer Vielzahl von Beuteln, z.B. als "Bag-blankets" bekannt, welche jeweils aus einer oder mehreren Komponenten bestehen können. Sie können aber auch in Form von Tabletten oder Pellets vorliegen. In jedem Fall muß das Metallphosphid eine Vielzahl von Verarbeitungsstufen durchlaufen, wie Mahlen, Mischen mit anderen Bestandteilen, Abfüllen in die Abgabebeutel oder -mittel, Pressen in Pellets oder Tabletten oder andere Körper mit gegebenenfalls speziellen Bindemitteln, Mischen mit Fasern und Bindemitteln und Formen der Mischung zu Platten oder ähnlichen Körpern, die ihrerseits dann mit einem feuchtigkeitsdurchlässigen Abdeckmaterial, z.B. Papier, bedeckt werden. In einer letzten Stufe wird das Produkt für Lagerung und Transport in einen gasdichten und feuchtigkeitssicheren Behälter eingeschlossen, in welchem es bis unmittelbar vor der beabsichtigten Verwendung gehalten wird. Während all dieser Vorgänge ist es in der Praxis schwierig, wenn nicht unmöglich, jeglichen Kontakt des Metallphosphids mit Feuchtigkeit zu vermeiden, sei es mit der Umgebungsfeuchtigkeit oder mit der Feuchtigkeit in den Materialien, mit welchen das Metallphosphid gemischt, beschichtet, bedeckt bzw. verpackt wird. Dies führt zu einer unvermeidlichen Hydrolyse eines Teils des Metallphosphids und zu einem höchst unerwünschten Verlust des so gebildeten Phosphingases an die Herstellungsumgebung. Ungeachtet der in der Fertigungsanlage getroffenen Vorsichtsmaßnahmen ist es schwierig, ein Entweichen eines Teils dieses Phosphingases in die Arbeitsumgebung vollständig zu vermeiden, so daß die Betriebsangehörigen dem hoch toxischen Phosphingas durch

2

Inhalation ausgesetzt werden. Obgleich die in die Arbeitsumgebung freigesetzten Konzentrationen in der Praxis sehr niedrig und weit unterhalb der von den Vorschriften für Fertigungsanlagen zulässigen Werte sind, ist dieser Zustand dennoch unerwünscht. Außerdem muß die unmittelbare Umgebung der Herstellungsanlage, selbst bei gutem Abschirmen der Arbeitsumgebung, in der einen oder anderen Form belüftet werden. Die dadurch von der Fertigungsanlage in die Umgebung freigesetzten Phosphingaskonzentrationen sind gering und stellen normalerweise keine Gefahr für Gesundheit oder Umwelt dar, da die Konzentrationen so niedrig sind und das Phosphingas sich weder in lebenden Organismen noch in der Umwelt akkumuliert, da es bald zu Produkten umgesetzt wird, die in den niedrigen, in Frage kommenden Konzentrationen völlig harmlos sind. Dennoch ergeben selbst diese niedrigen, in die Umgebung freigesetzten Konzentrationen eine Geruchsbelästigung (ein Geruch, ähnlich dem von Knoblauch oder Zwiebeln, der auch bei Verwendung von industriellem Acetylengas wahrgenommen wird, das normalerweise mit Spuren von Phosphin kontaminiert ist). Für dieses Problem ist bisher noch keine befriedigende Lösung gefunden worden.

b) Das Problem der unerwünschten Phosphinfreisetzung und -akkumulierung besteht auch innerhalb der Verpackung. Dies beruht auf dem unvermeidlichen Einschluß von Spuren von Feuchtigkeit in der Packung, die von den verwendeten Materialien herrührt. Diese Phosphinakkumulierung kann beim Öffnen der Packung gefährlich werden, da der plötzliche Kontakt des Phosphins mit der Atmosphäre zu einer als "Flashing" bekannten Selbstentzündung führen kann. Befindet sich das Produkt in erfahrenen Händen, dann ist das Phänomen der Selbstentzündung gewöhnlich harmlos, jedoch beängstigend. In einer feuergefährdeten Umgebung kann es jedoch eine Feuergefahr darstellen.

Gemäß dem Stand der Technik hat man den oben genannten Problemen entgegengewirkt

(i) durch weitgehende Vermeidung des Auftretens von Feuchtigkeit und Kontakt mit der Feuchtigkeit der Umgebung, in welcher die Verarbeitung und Verpackung erfolgt, sowie durch Auswahl von Materialien, wie Zusätze und Verpackungsmaterialien, die weitgehend feuchtigkeitsfrei sind, jedoch nie völlig feuchtigkeitsfrei sein können;

(ii) durch Mitverwendung von Mitteln zum Vernichten von Phosphin innerhalb der Packung, gewöhnlich in Form von Beuteln, die mit einer phosphinzerstörenden Zusammensetzung, wie Kupferoxid und ähnlichen Schwermetallzusammensetzungen, gefüllt sind. Dies ist jedoch unbefriedigend, weil sich die phosphinzerstörende Zusammensetzung fortschreitend verbraucht und die Zerstörung des Phosphins von feuchtigkeitsfreisetzenden Reaktionen begleitet ist, wodurch weitere Feuchtigkeit verfügbar wird, die ihrerseits mit dem Metallphosphid reagiert und weiteres Phosphin freisetzt. Weiter wird die Verwendung von Schwermetallzusammensetzungen heute als umweltschädlich angesehen.

c) Schließlich gibt es das äußerst wichtige Problem der vorzeitigen Phosphinfreisetzung und der Akkumulierung unerwünschter Konzentrationen nach Entfernen der Metallphosphidzusammensetzung aus der Packung zur tatsächlichen Verwendung, z.B. Ausbringung des Produktes in einem Schüttgut oder in einem mit Phosphin zu begasenden Lager- oder Transportraum. Wie oben erwähnt, ist Phosphingas äußerst toxisch, und es muß vermieden werden, daß die die Begasung ausführenden Personen merklichen Phosphinkonzentrationen ausgesetzt werden. Dies kann unter bestimmten Umständen aufgrund des Zeitabstandes zwischen dem Öffnen der ersten Packung und dem Einbringen des Produktes in die zu begasende Umgebung sehr schwierig sein. In der Vergangenheit konnten derartige Arbeitsgänge manchmal nicht ohne Verwendung von Gasmasken durchgeführt werden, die für den Verwender unangenehm sind und nach längerer Verwendung defekt werden können. Im Gegensatz zum Einsatz anderer Gase ist es zum Glück gewöhnlich nicht nötig, Gasmasken bei der Verwendung von Phosphorwasserstoff entwickelnden Schädlingsbekämpfungsmitteln zu verwenden. Dennoch entstehen selbst während der Anwendungsphase meßbare Phosphorwasserstoffkonzentrationen, insbesondere, wenn die Temperaturen und Feuchtigkeit relativ hoch sind.

Im Licht des ständig wachsenden Umweltbewußtseins gibt diese Tatsache Anlaß zu steigender Kritik, zumal Phosphorwasserstoff auch für den Menschen und höhere Tiere hoch toxisch ist. Die Tatsache, daß die Phosphinkonzentrationen bei den oben genannten Situationen - wenn entsprechende Vorsichtsmaßnahmen ergriffen werden - beträchtlich unterhalb der akzeptablen Gefahrenwerte liegen, wird von der Öffentlichkeit nicht länger als ausreichend angesehen.

In manchen Ländern oder Regionen verbieten daher Gewerkschaftsorganisationen die Verwendung von Phosphorwasserstoff freisetzenden Schädlingsbekämpfungsmitteln durch ihre Mitglieder nicht zuletzt deshalb, weil zumindest in der Vergangenheit mehrere Unfälle mit schwerwiegenden Folgen aufgrund von fehlerhaftem Handeln des Verwenders hingenommen werden mußten.

Um der hohen Feuchtigkeitsempfindlichkeit der oben genannten Präparate während der Handhabung, Verpackung und Anwendung Herr zu werden, wurde bisher versucht (DE-GM 18 29 597), die Phosphidteilchen oder die gesamten Tabletten mit Hartparaffin, natürlichen oder synthetischen Harzen, Wachsen oder Siliconen zu überziehen. Aus diesen erfolglosen Versuchen entstand der weitere Vorschlag (US-PS 3 132 067), die einzelnen Phosphidteilchen mit einem Überzug, insbesondere aus Hartparaffinwachs, vollständig einzuhüllen. Um bei der Verwendung des Präparates der Umgebungsfeuchtigkeit den nötigen Zugang zu den Phosphidteilchen zu erlauben, wurde die Einverleibung eines Sprengmittels, wie Ammoniumcarbamat, als nötig angesehen. Obgleich diese Überzuge aus feuchtigkeitsundurchlässigem Material und die Mitverwendung von Ammoniumcarbamat den Beginn der Phosphinbildung verzögern sollten, wurde dies in der Praxis nicht erreicht. Unter Berücksichtigung des Gewichtsverlustes der Tabletten aufgrund des Verlustes an Carbamat wurde gefunden, daß diese Tabletten in der Praxis innerhalb von einigen Minuten nach Berührung mit Feuchtigkeit wesentliche Phosphinmengen freizusetzen begannen und dies mehrere Tage lang weiter taten, wenn auch mit einer verringerten Geschwindigkeit und mit verminderter Gefahr einer Selbstentzündung.

Neuere Versuche zum Verbessern der Methoden zum Überziehen von Tabletten zwecks Erzielung einer geregelten Verzögerung des Beginns der Phosphinfreisetzung sind noch in einem frühen Entwicklungsstadium. Diese Methoden sind kompliziert und können auf viele Produkte, wie Platten, Pulver und Beutel, Bag-blankets u.dgl., nicht angewendet werden. Es besteht nach wie vor das Bedürfnis, die oben genannten Probleme zu überwinden oder zu vermindern.

Die aus der obigen Beschreibung des Standes der Technik hervorgehende Aufgabe der Erfindung umfaßt ein Verfahren und Mittel zum Verhüten oder Verzögern der Bildung unerwünschter Phosphinkonzentrationen in einem Raum oder einer Umgebung, nämlich

a) in Packungen, in welchen phosphinfreisetzende Zusammensetzungen (insbesondere auf der Basis von hydrolysierbaren Metallphosphiden) zur Lagerung und zum Transport verpackt sind, wobei das Ziel insbesondere darin besteht, Phosphinkonzentrationen zu vermeiden, die beim Öffnen der Packung die Gefahr einer Selbstentzündung mit sich bringen; und/oder

b) in einer zu begasenden Umgebung oder deren unmittelbaren Nachbarschaft, wobei das Ziel insbesondere darin besteht, die Beschäftigten zeitweilig davor zu schützen, gefährlichen Phosphinkonzentrationen ausgesetzt zu werden, während sie die Zusammensetzung zur Anwendung bringen.

Ein weiteres oder alternatives Ziel besteht im zeitweiligen Binden von Phosphingas, das vorzeitig freigesetzt sein kann, in reversibler Weise, um dadurch den Verlust an wertvollem Phosphin zu vermeiden oder zu vermindern.

Nach einem weiteren oder alternativen Ziel wird Phosphingas reversibel unter Schaffung eines neuen Schädlingsbekämpfungsproduktes gebunden, das einen oder mehrere der folgenden Vorteile bietet:

(1) Umkehrbarkeit der Phosphinbindung und daher die erneute Verwendbarkeit des Bindungsmediums;

(2) praktisch keine giftigen Rückstände nach der Phosphinfreisetzung und daher kein Abfall- oder Beseitigungsproblem;

(3) günstige Phosphinfreisetzungsgeschwindigkeiten;

(4) im Gegensatz zu Metallphosphiden keine Volumenerhöhung der Zusammensetzung bei der Phosphinfreisetzung (die in vorliegender Erfindung verwendeten Phosphinabgabemittel brauchen nicht an eine derartige Volumenerhöhung angepaßt zu werden).

Gemäß einem Aspekt der vorliegenden Erfindung wurde ein Verfahren geschaffen, das das Merkmal umfaßt, daß eine phosphinfreisetzende Zusammensetzung oder Verbindung, vorzugsweise aus einem hydrolysierbaren Metallphosphid, die von ammoniakfreisetzenden Komponenten praktisch frei ist, in einen Zeolithen eingebracht oder in unmittelbarer Nachbarschaft zu diesem gehalten wird, wobei der Zeolith eine Porenweite von 0,3 nm aufwärts und ein Adsorptionsvermögen für Feuchtigkeit, Phosphingas oder vorzugsweise für beides hat, und wahlweise die anschließende Stufe einer Freisetzung des durch den Zeolithen adsorbierten Phosphins an eine einer Schädlingsbekämpfungsbehandlung auszusetzenden Umgebung durchgeführt wird.

Die Angabe "von ammoniakfreisetzenden Komponenten praktisch frei" bezieht sich auf Substanzen, wie Ammoniumcarbamat und Ammoniumcarbonat, die selbst bei Umgebungstemperaturen, bei welchen die Zusammensetzungen gelagert oder verwendet werden, ausreichend hohe Ammoniak-Dampfdrucke bilden, so daß sie ernstlich um die Adsorptionsstellen der Zeolithe konkurrieren. Andererseits können Zusätze, die relativ niedrige Ammoniakdrucke bilden, wie Ammoniumsalze von Fettsäuren, z.B. Ammoniumstearat, toleriert werden.

Ammoniakfreisetzende Bestandteile, insbesondere Ammoniumcarbamat, sind seit mehr als zwei Jahrzehnten üblichen phosphinfreisetzenden Zusammensetzungen einverleibt worden, um eine Selbstentzündung zu vermeiden. Diese Zusätze ergeben jedoch zahlreiche Nachteile. Sie sind nicht nur teuer, sondern können auch nicht vollständig feuchtigkeitsfrei hergestellt werden und führen daher zur Zufuhr von unerwünschter Feuchtigkeit. Außerdem hat das freigesetzte Ammoniak einen unangenehmen Geruch und kann manche Produkte schädigen. Gemäß dem oben definierten Verfahren soll die Anwesenheit von ammoniakfreisetzenden Bestandteilen nicht nur aus den soeben angeführten Gründen vermieden werden, sondern auch, weil die beim Verfahren verwendeten Zeolithe eine hohe Adsorptionskapazität für Ammoniak haben, das dann mit Wasserdampf bzw. Feuchtigkeit und Phosphingas um Adsorptionsstellen konkurriert. Die erfindungsgemäß verwendeten Zeolithe haben einen möglichst niedrigen Wassergehalt, vorzugsweise 0,5 Gew.-% $H_2O$ oder weniger, obgleich auch Wassergehalte bis zu 1,5 Gew.-% $H_2O$ noch gute Ergebnisse liefern können. Zeolithe mit einer Porenweite von 0,3 nm oder mehr sind zum Adsorbieren von Feuchtigkeit geeignet und verhüten oder verzögern dadurch den Zugang dieser Feuchtigkeit zum Metallphosphid. Dies wiederum verhindert oder verzögert den Beginn der Hydrolyse und die Freisetzung von Phosphingas. Ein weiterer Effekt der Zeolithe besteht in der Adsorption von Phosphin, sobald es gebildet und in der den Zeolithen enthaltenden Umgebung anwesend ist. Damit letzterer Effekt eintritt, sind Zeolithe mit einer Porenweite von 0,4 nm, vorzugsweise von 0,5 nm aufwärts, besonders wirksam. Die Phosphinadsorption erfolgt ohne feuchtigkeitsfreisetzende Reaktionen, weshalb der mit den bekannten, phosphinzersetzenden Zusammensetzungen auftretende Circulus vitiosus nicht eintritt.

Besonders bevorzugt werden Zeolithe mit einer Porenweite im Bereich von 0,4 bis 1,5 nm.

Neben der $PH_3$-Adsorption, die reversibel ist, insbesondere, wenn die Temperatur des Zeolithen nach der Adsorption kurzzeitig erhöht wird, kann weiteres Phosphin irreversibel in größerem oder kleinerem Maß durch Absorption entfernt werden. Dies umfaßt eine irreversible Umwandlung des Phosphins in Oxidationsprodukte. Diese Absorption ist besonders wirksam bei relativ hohen Temperaturen und führt zur wirksamen, irreversiblen Phosphinentfernung unter Lagerungsbedingungen bei hoher Temperatur, wo die Gefahr einer Selbstentzündung besonders akut ist. Dieser letztgenannte, erfindungsgemäße Effekt beruht auf einem bisher noch nicht bekannten Phänomen.

Erfindungsgemäß geeignete Zeolithe sind als solche bekannt. Zweckmäßige kommerzielle Arten sind z.B. 3A, K-Na-Form, 4A, Na-From, 5A-Arten in Ca-Na-Form und 13X-Zeolith in Na-Form. Das kommerzielle Produkt ist normalerweise in Form kugeliger Granulatteilchen von 0,8 bis 6 mm Durchmesser oder in Pulverform einer Teilchengröße von 2 bis 25 μm verfügbar. Für erfindungsgemäße Zwecke werden diese Granulate vorzugsweise auf eine Teilchengröße von nicht über 5 mm, z.B. auf einen Teilchengrößenbereich von 0,001 bis 2,5 mm, vorzugsweise 0,1 bis 2 mm, zerkleinert.

Das oben dargelegte Verfahren kann auf verschiedene Weise zur Überwindung oder Abschwächung der oben beschriebenen Probleme des Standes der Technik eingesetzt werden. Es kann beim Verpacken und Lagern von Metallphosphidzusammensetzungen oder -verbindungen angewendet werden, indem der Zeolith mit dem Metallphosphid in der Packung mitverwendet wird. Hierzu kann der Zeolith, z.B. als Tablette, Pellet oder zeolithhaltiger Beutel, getrennt vom Metallphosphid, mitverwendet werden.

Der Zeolith kann jedoch auch in die Zusammensetzung oder Verbindung selbst oder als physikalischer Teil derselben verwendet werden. Ausführungsformen, bei welchen der Zeolith der Metallphosphidzusammensetzung als solche einverleibt wird, bieten sich an zum Abschwächen oder Überwinden der obigen, während der Herstellung dieser Zusammensetzungen und Produkte auftretenden Probleme. Durch Beimischen des Zeolithen zum Metallphosphid im frühest möglichen Herstellungsstadium wird Feuchtigkeit, die andernfalls mit dem Metallphosphid reagieren würde, durch den Zeolithen selektiv adsorbiert und dadurch an einer Reaktion mit dem Metallphosphid gehindert.

Der Zeolith kann alternativ oder zusätzlich als ein die Tablette, das Pellet oder einen ähnlichen Preßkörper einhüllenden Überzug eingesetzt werden. Übliche Tablettierhilfsmittel können als Bindemittel für den Zeolithüberzug verwendet werden; sie sind vorzugsweise wasserabstoßend, z.B. wasserunlösliche Metallseifen, wie Magnesiumstearat oder Aluminiumstearat und werden beispielsweise in Konzentrationen von 5 bis 30%, vorzugsweise 8 bis 20%, z.B. 15%, bezogen auf das Gewicht des Überzuges angewendet.

Somit schafft die Erfindung auch ein Verfahren zur Herstellung von Preßkörpern mit einem Zeolithüberzug, bei welchem man in einem vorzugsweise zylindrischen Formhohlraum einer Tablettierpresse, z.B. einer Exzenterpresse, ein Teil des den Überzug bildenden Zeolithen, z.B. 55 bis 85% desselben, in Pulverform einführt und zu einem schüsselförmigen Korper preßt, wobei der Zeolith wahlweise mit einem Tablettierhilfsmittel gemischt sein kann. Dabei kann ein oberes Formteil mit geeigneter, z.B. kegelstumpfartiger Verjüngung verwendet werden, worauf die Tablettenmischung aus Metallphosphid mit üblichen Tablettierhilfsmitteln und Zusätzen (jedoch praktisch frei von ammoniakfreisetzenden Komponenten, wie weiter oben erläutert) und anschließend daran der Rest des Zeolithpulvers oder feinen Zeolithgranulates (z.B. 15 bis 45% der Gesamtmenge) eingeführt werden, worauf die Tablette mit einer entsprechend geformten Form fertiggepreßt wird. Die untere Form (die zum Ausstoßen der fertigen Tablette aus dem Formhohlraum dient) und der obere Stempel der Tablettiervorrichtung können flach sein oder eine konkave Konfiguration aufweisen, so daß Tabletten mit gewölbten Enden oder von ungefähr kugeliger Konfiguration erhalten werden.

Der Zeolith kann mit Metallphosphid, z.B. in Form von Pulvermischungen oder Granulaten, gemischt werden (um in Beutel, "Bag-blankets" usw. eingefüllt zu werden). Das Gewichtsverhältnis von Metallphosphid zu Zeolith in der Mischung kann z.B. 1:0,05 bis 1:2 betragen, was u.a. von der Adsorptionskapazität des Zeolithen abhängt. Es liegt jedoch vorzugsweise im Bereich von 1:0,07 bis 1:1, insbesondere bis 1:0,3. Derartige Formulierungen zeigen eine verzögerte Phosphinfreisetzung, wenn sie Luft ausgesetzt werden. Z.B. erweist sich ein so niedriges Verhältnis wie 1:0,1, vorzugsweise 1:0,2, in Beuteln oder in Tabletten als wirksam. In sogenannten Platten wird ein so niedriges Verhältnis wie 1:0,07 bevorzugt.

Die Erfindung kann somit angewendet werden, um eine verzögerte Freisetzung von Phosphingas aus der phosphinfreisetzenden Zusammensetzung oder Verbindung nach dem Öffnen der Packung zu erzielen, insbesondere als Teil eines Begasungsverfahrens. In diesem Fall erfolgt die Verzögerung durch den Zeolithen, der den Zugang von Feuchtigkeit zur Metallphosphidzusammensetzung inhibiert und so verhindert, daß Feuchtigkeit mit dem Metallphosphid in Reaktion tritt; und selbst wenn eine gewisse Reaktion zwischen dem Metallphosphid und der Feuchtigkeit unter Freisetzung von Phosphingas erfolgt, wird die Abgabe desselben an die Umwelt durch Adsorption oder Absorption durch den Zeolithen verhindert oder zumindest vermindert.

Das Weglassen von ammoniakfreisetzenden Bestandteilen bei den Produkten kann es zweckmäßig machen, verschiedene bekannte Alternativmaßnahmen zu ergreifen, um eine Selbstentzündung zu verhindern, z.B. durch ein Arbeiten in Anwesenheit von Kohlendioxid. In manchen Produkten werden überhaupt keine weiteren Zusatze verwendet.

Es kann zweckmäßig sein, die Metallphosphidteilchen mit wasserabstößenden Substanzen, wie Paraffin, Stearin, wasserunloslichen Metallseifen, wie Aluminiumstearat, Magnesiumstearat, Calciumstearat oder Zinkstearat, in per se bekannter Weise zu imprägnieren (um die Metallphosphidteilchen zu hydrophobieren). Im Fall einer Imprägnierung mit festem Paraffin oder Stearin kann die Menge desselben z.B. 1 bis 5%, vorzugsweise 2 bis 4%, insbesondere 3%, (bezogen auf das Gewicht) betragen. Die oben genannten Metallseifen können in Form eines besonders feinen Pulvers in Mengen von 1 bis 15%, vorzugsweise 3 bis 10%, (bezogen auf das Gewicht), beigemischt werden.

Ebenfalls sehr wirksam ist das Hydrophobieren der Metallphosphidteilchen mit wasserabstoßenden Organosiliciumverbindungen, wie Silicone, Silane oder Siloxane. Besonders bevorzugt wird die Verwendung von reaktionsfähigen Silanen oder Siloxanen gemäß RSA-PS 77/7233 (US-PS 4 600 584 und 4 421 742).

Ein Effekt der Zeolithe im erfindungsgemäßen Verfahren besteht darin, daß sie auch Diphosphan, das zu einer Selbstentzündung neigt, absorbieren und abbauen. Die Erfindung wird daher sehr vorteilhaft auch auf Zusammensetzungen und Verbindungen mit einer Neigung zur Bildung von Diphosphan, z.B. auf Zusammensetzungen oder Verbindungen auf der Basis von Calciumphosphid, angewendet.

Gemäß einem weiteren Aspekt der Erfindung wird eine gasdichte Verpackung für phosphinfreisetzende, von ammoniakfreisetzenden Komponenten praktisch freie Zusammensetzungen, wie sie oben beschrieben sind, geschaffen, wobei die Verpackung Mittel zur Verhinderung von unerwünschten Phosphinkonzentrationen enthält, und das Mittel einen Zeolithen mit einer Porenweite ab 0,3 nm umfaßt und eine Adsorptionskapazität für Wasserdampf, Phosphingas oder beides hat.

Die verschiedenen, weiter oben im Zusammenhang mit dem Verfahren beschriebenen Merkmale können mutatis mutandis auch auf die erfindungsgemäße Packung angewendet werden. Dies gilt auch für die Eigenschaften des Zeolithen sowie für das Merkmal, daß der Zeolith separat, z.B. in Form von Tabletten, Pellets oder zeolithhaltigen Beuteln, in die Packung eingebracht, lose in der Packung mitverwendet oder in ein spezielles Abteil derselben eingeschlossen werden kann, wobei letzteres jedoch mit der restlichen Packung in Verbindung stehen muß. Wie im Fall des Verfahrens kann der Zeolith auch der phosphinfreisetzenden Zusammensetzung oder Verbindung einverleibt werden oder einen Teil derselben bilden.

Die vorliegende Erfindung stellt auch ein Mittel zur Verfügung, um die Bildung unerwünschter Phosphinkonzentrationen in einem Raum oder einer Umgebung zu verhindern oder zu verzögern, wobei das Phosphin aus den oben genannten phosphinfreisetzenden Zusammensetzungen oder Verbindungen herrührt, wobei das Mittel ein gasdurchlässiger Behälter oder Körper ist, der einen Zeolithen mit einer Porenweite von 0,3 nm aufwärts und eine Adsorptionskapazität für Wasserdampf, Phosphingas oder beides hat. Wiederum gelten die verschiedenen oben beschriebenen Merkmale und Zusatzmittel, die auf das Verfahren und die Packung anwendbar sind, mutatis mutandis auch für das soeben definierte Mittel. Das Mittel kann z.B. ein gasdurchlässiger Einzel- oder Mehrfachbeutel, z.B. aus gas-und feuchtigkeitsdurchlässigem Papier oder gas- und feuchtigkeitsdurchlässigem Stoff oder vorzugsweise nichtgewebtem Kunststoffasermaterial (auch als Vlies bezeichnet) sein, bzw. das Mittel kann in Form eines Preßkörpers, z.B. als Pellet oder Tablette, vorliegen, der den Zeolithen enthält, jedoch für die erfindungsgemäßen Zwecke genügend porös sein muß.

Gemäß einem weiteren Aspekt der Erfindung wird ein phosphinfreisetzendes Schädlingsbekämpfungspräparat geschaffen, das ein hydrolysierbares Metallphosphid, insbesondere wie oben beschrieben, und ein Mittel zum Verhüten oder Verzögern der Bildung unerwünschter Phosphinkonzentrationen in einem Raum oder einer Umgebung, die von dem Metallphosphid herrührt, umfaßt, wobei dieses zusätzliche Mittel einen Zeolithen mit einer Porenweite ab 0,3 nm enthält oder eng mit diesem assoziiert ist und eine Adsorptionskapazität für Feuchtigkeit, Phosphingas oder beides hat. Wiederum gelten die bevorzugten Merkmale des Zeolithen, die auf das Verfahren anwendbar sind, auch für das vorliegende Präparat. Der Zeolith kann mit dem Metallphosphid und wahlweise vorliegenden Hilfssubstanzen gemischt werden. Das Präparat kann auch in Form sogenannter Ma-

EP 0 342 471 B1

gnesiumphosphidplatten, d.h. Produkten auf Magnesiumphosphidbasis, vorliegen, bei welchen das Magnesiumphosphid einer Matrix aus harzartigem Bindematerial, wahlweise zusammen mit einem faserartigen Material, einverleibt, und mit einer gas-und feuchtigkeitsdurchlässigen Schicht aus Papier bedeckt ist, die mit dem magnesiumphosphidhaltigen Kern zu einem Schichtstoff verbunden ist.

Der Zeolith kann auch einer metallphosphidhaltigen, zu Tabletten oder Pellets gepreßten Mischung einverleibt werden.

Zusätzlich oder als Alternative können metallphosphidhaltige Preßkörper, wie Tabletten oder Pellets, mit dem Zeolith überzogen werden.

Die fertigen erfindungsgemäßen Produkte werden in an sich bekannter Weise in gasdichten Behältern verpackt und gelagert.

Der Zeolith in den verschiedenen Ausführungsformen der Erfindung kann mit einem die Entzündung verzögernden Schutzgas, wie $CO_2$, $N_2$ oder Ar, teilweise beladen werden.

In der Mehrzahl der oben beschriebenen Ausführungsformen kann aufgrund der Umkehrbarkeit der Phosphinadsorption an dem Zeolithen dieser selbst anschließend als Schädlingsbekämpfungsmittel wirken, nachdem er Phosphin im Rahmen seiner Schutzfunktion adsorbiert hat. Dies geschieht, wenn der Zeolith anschließend das adsorbierte Phosphin an die Atmosphäre freisetzt. Somit bezieht sich eine Ausführungsform der Erfindung auf ein Schädlingsbekämpfungsmittel, welches ein spezielles Material umfaßt, das Phosphingas in einer Umgebung freisetzt, in welcher Schädlinge bekämpft werden sollen, und auf ein Verfahren zur Herstellung eines derartigen Schädlingsbekämpfungsmittels, bei welchem das phosphingasfreisetzende Material ein Zeolith ist, der mit reversibel adsorbiertem Phosphin beladen worden ist und wahlweise Zusatzstoffe enthält.

Der Zeolith kann z.B. in Pulver- oder Granulatform, vorzugsweise in Form eines kugeligen Granulates, z.B. von 1 bis 5 mm Durchmesser, vorzugsweise 1,5 bis 3 mm Durchmesser, vorliegen.

Es wurde gefunden, daß bei ganz speziellen, sehr aktiven Zeolithen die Gefahr einer Selbstentzündung auftreten kann, insbesondere, wenn der Zeolith in Form relativ kleiner Teilchen vorliegt und wenn seine volle Kapazität für die Phosphinbeladung ausgenutzt wird. Der Zeolith wird daher vorzugsweise auf nicht mehr als 66%, insbesondere nicht mehr als 50% seiner maximalen Adsorptionskapazität für Phosphingas beladen, insbesondere zwischen 20 und 50% seiner Adsorptionskapazität.

Wahlweise verwendete Zusätze können z.B. die im Zusammenhang mit Phosphin per se bekannten Selbstentzündungsinhibitoren (andere als ammoniakfreisetzende Verbindungen), Preßhilfsmittel (wenn die Zusammensetzung tablettiert werden soll) oder Bindemittel umfassen.

Bei einer alternativen Ausführungsform, die ebenfalls das Problem der Selbstentzündung vermeidet, wird der Zeolith teilweise mit Kohlendioxid und teilweise mit Phosphingas, z.B. in einem Verhältnis von 2:3 bis 4:1, vorzugsweise von 1:1 bis 2:1, beladen. Diese Ausführungsform bietet den weiteren Vorteil, daß Kohlendioxid bei gleichzeitiger Freisetzung mit dem Phosphin aus dem Zeolithen die toxische Wirkung des Phosphingases auf die Schädlinge, z.B. Insekten, in synergistischer Weise verstärkt.

Der Zeolith sollte vorzugsweise eine Porengröße von 0,5 nm oder mehr, insbesondere im Bereich von 0,5 bis 1,0 nm, haben. Der Zeolith ist vorzugsweise vom sogenannten 5A-Typ, vorzugsweise in Ca-Na-Form; er sollte relativ trocken sein und hat vorzugsweise einen Feuchtigkeitsgehalt von 1,5 Gew.-% Wasser oder weniger, insbesondere von 0,5 Gew.-% Wasser oder weniger.

Wie von Metallphosphidzusammensetzungen bzw. -verbindungen bekannt ist, kann das erfindungsgemäße Schädlingsbekämpfungsmittel auch in einem gasdurchlässigen Abgabemittel enthalten sein, das vorzugsweise wiederverwendbar ist z.B. in Beuteln, hergestellt aus gasdurchlässigem Papier oder Kunststoffmaterial, nicht-gewebten Stoffen (auch als Vlies bekannt) oder in Patronen. Bei einem relativ groben Granulat kann die Porengröße des Beutel-Materials für das Abgabemittel wesentlich gröber sein als im Fall von Metallphosphidzusammensetzungen, wo Staubprobleme auftreten, wenn die Porengröße nicht ausreichend fein ist.

Für Transport und Lagerung wird das erfindungsgemäße Schädlingsbekämpfungsmittel in gasdichte Behälter (wie sie auch im Zusammenhang mit Metallphosphidzusammensetzungen bekannt sind), z.B. in Metallbehälter, wie gasdichte Trommeln, Dosen oder Beutel oder Umschläge aus Metallfolie, z.B. Aluminiumfolien oder in mit einer oder mehreren Schichten Kunststofffilm beschichteten Metallfolie, verpackt. Ebenfalls geeignet sind bestimmte synthetische Harzlaminate, die üblicherweise in gas- und feuchtigkeitsdichten Verpackungen von Metallphosphidzusammensetzungen verwendet werden, z.B. mehrschichtige Laminate aus Polyethylen oder noch gasundurchlässigeren Harzen, wie Polyvinylidenchlorid (PVDC). Außerdem sind dicht verschlossene Metallflaschen geeignet.

Gemäß einem weiteren Aspekt liefert die Erfindung ein Verfahren zur Schädlingsbekämpfung unter Verwendung von Phosphingas, bei welchem Phosphin aus einem Zeolithen freigesetzt wird, der reversibel adsorbiertes Phosphingas enthält. Das Phosphin wird aus dem Zeolithen bei einem Kontakt mit anderen Gasen, wie Stickstoff oder Sauerstoff der Luft, freigesetzt. Dabei spielen endotherme Diffusionsphänomene eine Rolle. Phosphin wird jedoch in besonders wirksamer Weise freigesetzt, wenn es durch Wassermoleküle feuchter Luft verdrängt wird, da die Affinität des Zeolithen für Wasser größer als für Phosphingas ist. Dieser Vorgang ist exotherm. Der Zeolith wird daher vorzugsweise in Anwesenheit von Feuchtigkeit als Schädlingsbekämpfungsmittel angewendet. Die bevorzugten Eigenschaften des Zeolithen sind die, die weiter oben bei der Beschreibung der Schädlingsbekämpfungsmittel angegeben wurden. Bei einer besonderen Ausführungsform des Verfahrens wird der Zeolith (z.B. in speziellen Abgabepatronen) einem zirkulierenden Gas, z.B. einem durch die zu begasende Umgebung zirkulierenden Luftstrom, der z.B. durch ein (Schütt-)Gut, wie Getreide, zirkuliert, ausgesetzt.

Der Zeolith kann z.B. dem Gasstrom in einem Generator außerhalb des Raumes, in dem die Schädlinge bekämpft werden sollen, ausgesetzt werden, wobei das Gas aus dem Generatorraum dann in den Begasungsraum eintritt und zirkuliert.

Das Phosphin kann auch aus einem derartigen Generator (z.B. aus einer Patrone) mit sehr niedriger Konzentration in einem langsamen Luftstrom entsprechend der Durchfließmethode nach R.G. Winks ("Flow-through phosphine fumigation - a new technique", Stored Grain Protection Conference, 1983, Sect. 5.1, und in "The Effect of Phosphine on Resistant Insects" GASCA Seminar on Fumigation Technology in Developing Countries, Tropical Development and Research Institute, Storage Department, Slough 18-2, März 1986) freigesetzt werden. Bei diesem Verfahren waren so niedrige Konzentrationen wie 4 $\mu$g/l über 6 Wochen oder 50 $\mu$g/l über 12 Tage gegen die am meisten resistenten Schädlinge in vollem Umfang wirksam.

Im Prinzip können die Schädlingsbekämpfungszusammensetzungen, die reversibel mit Phosphin beladenen Zeolith umfassen, in analoger Weise verwendet werden, wie übliche, phosphinfreisetzende Zusammensetzungen zur Anwendung gelangen. Bezüglich der Phosphinkonzentrationen und Behandlungsdauer gelten die gleichen Prinzipien.

Der verbrauchte Zeolith kann zurückgewonnen, reaktiviert und mit Phosphin oder Phosphin und Kohlendioxid erneut beladen werden, wobei die Reaktivierung z.B. durch Trocknen bei erhöhter Temperatur, beispielsweise im Bereich von 300 bis 500°C, vorzugsweise etwa 400°C, erfolgt.

Das oben erläuterte Verfahren zur Herstellung eines Schädlingsbekämpfungsmittels besteht darin, daß ein praktisch trockener Zeolith, vorzugsweise mit den oben beschriebenen Eigenschaften, dem Kontakt mit Phosphingas unterworfen wird, bis bis zu 70 Gew.-%, vorzugsweise zwischen 20 und 66 Gew.-%, insbesondere 20 bis 50 Gew.-%, der gesamten Adsorptionsstellen des Zeoliths mit Phosphin beladen worden sind. Gemäß einer bevorzugten Ausführungsform wird ein Teil der Adsorptionsstellen mit Kohlendioxidgas beladen. Dies erfolgt vorzugsweise, indem der Zeolith zuerst Kohlendioxid ausgesetzt wird, bis eine Sättigung bezüglich Kohlendioxid erreicht ist, worauf er, wiederum bis zur Sättigung Phosphingas ausgesetzt wird, und der beladene Zeolith in einen gasdichten Behälter eingeschlossen wird.

In DE-OS 27 46 910 wird ein Verfahren zur Rückgewinnung von Phosphin und Methylphosphan oder Mischungen aus beiden aus Abgasen beschrieben, bei welchem Zeolithe mit einer Porengröße von 5 bis 15 x $10^{-8}$ cm bei Temperaturen zwischen -20 und +30°C bis zur Sättigung mit der Abgasmischung in Berührung gebracht werden, worauf die Zeolithe auf 180 bis 230°C erhitzt und die dadurch desorbierten Phosphin- und/oder Methylphosphangase zurückgewonnen werden. Die dort beschriebene Methode zum Beladen von Zeolith kann auch zur Herstellung der erfindungsgemäßen Schädlingsbekämpfungsmittel angewendet werden. Im Gegensatz zum soeben beschriebenen Stand der Technik wird der Zeolith jedoch anschließend zur Lagerung, zum Transport und zur endgültigen Verwendung als Schädlingsbekämpfungsmittel in luftdichte Behälter verschlossen. Die Freisetzung des Phosphingases erfolgt jedoch aufgrund der allmählichen Verdrängung des Phosphins von den Adsorptionsstellen durch die Feuchtigkeit der Atmosphäre bei Umgebungstemperatur und nicht bei stark erhöhten Temperaturen, wie in der Literaturstelle beschrieben. Bei derartigen erhöhten Temperaturen wird ein Teil des Phosphingases permanent in Form von Oxidationsprodukten absorbiert, was zu Problemen, z.B. zu Verlusten an gewünschtem Phosphingas führt.

Die Erfindung wird im folgenden beispielhaft näher erläutert, und zwar teilweise mit Bezug auf die beiliegenden Zeichnungen.

In den Zeichnungen bedeutet

Fig. 1 einen schematischen Querschnitt durch einen mit einem erfindungsgemäßen Schädlingsbekämpfungsmittel gefüllten Beutel.

Fig. 2 ist ein Querschnitt durch die Preßform einer Tabletttiervorrichtung zur Herstellung erfindungsgemäßer Schädlingsbekämpfungstabletten.

Fig. 3 zeigt einen Querschnitt durch eine erfindungsgemäße, überzogene Tablette, die mit der Vorrichtung gemäß Fig. 2 hergestellt worden ist.

Fig. 4 ist ein schematischer Querschnitt eines als sogenannte "Platte" bezeichneten erfindungsgemäßen Schädlingsbekämpfungserzeugnisses.

Fig. 5 zeigt einen rohrförmigen Lagerungsbehälter, der sowohl Tabletten aus Schädlingsbekämpfungsmittel als auch Schutztabletten enthält.

<u>BEISPIEL 1</u>

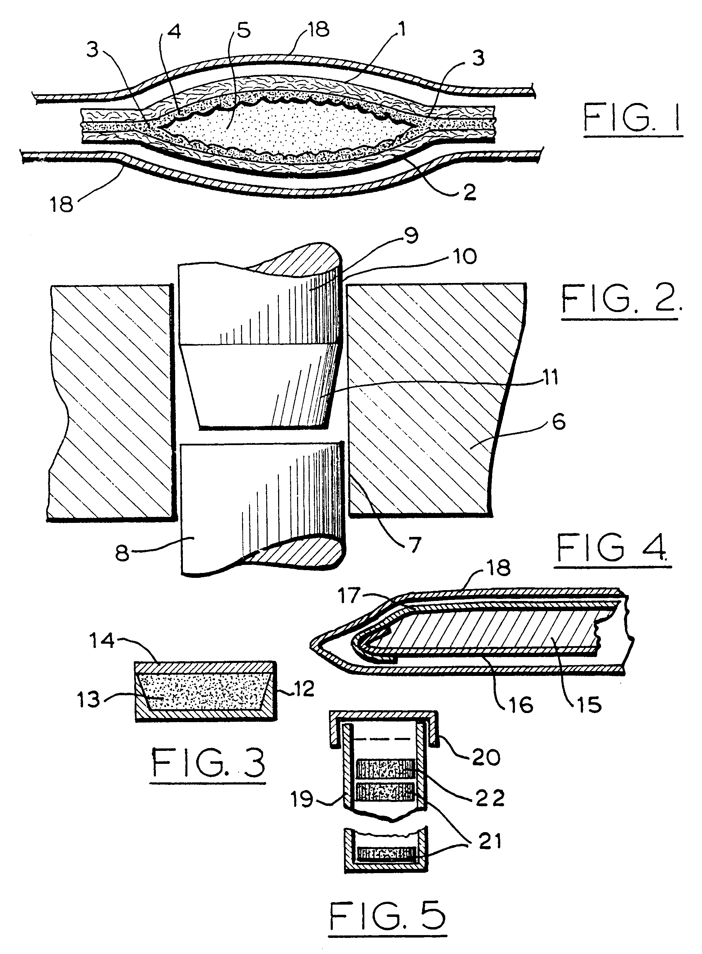

Pulverförmiger Zeolith 13X, Porendurchmesser 1,0 nm, Na-Form, Teilchengröße etwa 10 μm, Feuchtigkeitsgehalt 0,24 Gew.-% $H_2O$, wurde mit technischem Magnesiumphosphid einer Teilchengröße von 0,1 bis 0,6 mm homogen im Verhältnis von 9 Teilen Zeolith zu 10 Teilen Magnesiumphosphid gemischt. Die Zusammensetzung wurde in den gewünschten Mengen in Beutel nach Fig. 1 gefüllt, die aus 2 Schichten 1 und 2 eines Spinnvlieses aus Polyethylen mit einem Gewicht pro Flächeneinheit von 74,6 g/m² bestanden. Das Innere der Vliesstofflagen 1 und 2 war durch Pulver-Sprühbeschichtung mit einer hoch porösen Bindeschicht aus Ethylen-Vinylacetat (EVA) mit niedrigerem Schmelzpunkt als das Vliesstoffmaterial überzogen, um als Bindeschicht gemäß der europäischen Patentanmeldung 88 108 349.7 zu wirken. Die Beutel wurden durch Heißsiegeln der zwei Vliesstofflagen an deren Rändern entlang der Schweißnaht 3 gebildet. Die Bindeschicht ist mit 4 und das pulverförmige Schädlingsbekämpfungsmittel mit 5 bezeichnet. In der Praxis kann eine beliebige Anzahl derartiger Beutel über die Schweißnähte unter Bildung eines Bandes miteinander verbunden werden, so daß eine Beutelreihe entsteht. Gegebenenfalls können zwei oder mehrere derartige Reihen von Beuteln der Länge nach miteinander verbunden werden. Derartige Anordnungen sind in der Fachwelt als "Bag-blankets" bekannt. Zur Lagerung oder zum Transport wird letztere aufgerollt und in eine gasdicht verschließbare Dose aus Metallblech gegeben. Beutel werden in ähnlicher Weise in gasdichte Behälter oder Umschläge verpackt, die denjenigen ähnlich sind, die in Fig. 4 dargestellt sind.

Zum Testen wurden Beutel mit Seitenlängen von 1,4 x 4,2 cm und einer Füllung von jeweils 205 mg der Pulvermischung verwendet.

Vergleichsbeutel mit identischen Abmessungen und Eigenschaften wurden jeweils mit 109 mg des gleichen technischen Magnesiumphosphids, jedoch ohne Zeolith, gefüllt.

Die Bildung von Phosphin aus den Beuteln wurde bestimmt, indem sie in einem 11-1-Exsikkator feuchter Luft einer relativen Luftfeuchtigkeit von 50% bei 21°C ausgesetzt wurden.

Die Ergebnisse sind in Tabelle 1 angegeben.

Tabelle 1

| Zeit (min) | Zeolith-enthaltende Beutel (ppm $PH_3$) | Vergleichsbeutel (ppm $PH_3$) |
|---|---|---|
| 0 | 0 | 0 |
| 2 | 0 | 7 |
| 5 | 0 | 20 |
| 10 | 0 | 31 |
| 20 | 1 | 68 |
| 30 | 9 | 110 |
| 60 | 50 | 200 |
| 120 | 95 | 350 |

Wie ersichtlich, begann bei den Vergleichsbeuteln fast sofort eine erhebliche Phosphinbildung, während die erfindungsgemäßen Beutel erst nach etwa 20 min oder mehr mit einer merklichen Phosphinbildung anfingen, was eine wichtige Zeitverzögerung ergab, innerhalb welcher die erfindungsgemäßen Beutel ohne Gefahr vom Begasungspersonal gehandhabt werden können. Die Zeitverzögerung beruht anfangs hauptsächlich auf der Verzögerung des Zugangs von Feuchtigkeit zum Magnesiumphosphid, wofür eine Porenweite des Zeolithen von 0,3 nm oder mehr geeignet ist. Eine sekundäre Wirkung ist die kurze reversible Adsorption von Phosphin durch den Zeoliten, das jedoch anschließend fast quantitativ freigesetzt wird, wenn der Zeolith mit Feuchtigkeit gesättigt wird; hierzu sind Zeolithe mit einer Porenweite von 0,5 nm oder mehr besonders wirksam.

Die Beutel können einzeln verwendet oder durch flexible Verbindungen in an sich bekannter Weise als sogenannte Bag-blankets, Beutelbänder oder ähnliche Anordnungen miteinander verbunden verwendet werden. Anstelle von Magnesiumphosphid kann z.B. Aluminiumphosphid verwendet werden. Gute Ergebnisse werden dabei erzielt, wenn ein Gewichtsverhältnis von Aluminiumphosphid zu Zeolith beispielsweise 1:0,2 beträgt.

BEISPIEL 2

In diesem Beispiel wird die in Fig. 2 gezeigte, spezielle Tablettiervorrichtung verwendet, die eine Form 6 mit einer Aussparung 7 aufweist, die einem unteren Formteil 8 mit zylindrischer Konfiguration angepaßt ist und einen oberen Formstempel 9 mit einem oberen zylindrischen Bereich 10 und einem entfernbaren, unteren, kegelstumpfartigen Teil 11 aufweist. Im speziellen Beispiel betrug der Bohrungsdurchmesser 1,9 cm und der untere Durchmesser des kegelstumpfartigen Abschnittes 11 1,6 cm.

In der ersten Verfahrensstufe wurden 0,5 g Zeolithpulver, Typ 4A, Na-form in die Form gegeben; dann wurde der Formstempel 10 mit dem Teil 11 zur Bildung eines schüsselförmigen Zeolithpreßlings 12 mit einer Randhöhe von 14 mm senkrecht nach unten gepreßt. Nach Entfernung des Teils 11 wurden 1,55 g technisches Aluminiumphosphidpulver mit einer Teilchengröße von 0,3 bis 0,6 mm, das mit 3% Hartparaffin imprägniert war, durch einen Trichter ins Zentrum des schüsselförmigen Körpers 12 eingeführt. Dann wurde die Form vollständig mit Zeolith 13X, Na-Form, mit einem Porendurchmesser von 0,9 nm und einer Teilchengröße von 0,04 bis 0,25 mm gefüllt und oben glatt gestrichen. Das Pressen der Tablette erfolgte durch Abwärtspressen des Formstempels 10. Dies ergab eine feste und stabile, zylindrische, wie in Fig. 3 dargestellte Tablette mit einem Durchmesser von 1,9 cm, einer Höhe von 0,65 cm und einem Gewicht von 2,4 g mit einem Kern 13 aus Aluminiumphosphid, der vollständig durch den schüsselförmigen Zeolithteil 12 und einer Zeolithbedeckung 14 eingehüllt war. Der Zeolithüberzug hatte eine Wanddicke von 0,8 bis 1,2 mm.

Die Tabletten wurden in einer Kammer von 0,035 $m^3$ Volumen bei 21°C und 40% relativer Luftfeuchtigkeit getestet. Das Verhalten wurde mit einer Tablette der gleichen Abmessungen verglichen, die 70% technisches Aluminiumphosphid, 27% Ammoniumcarbamat und 3% Hartparaffin (Gesamtgewicht 3 g) enthielt, was eine übliche Aluminiumphosphid-Tablettenzusammensetzung darstellt. Die Ergebnisse sind aus Tabelle 2 ersichtlich.

Tabelle 2

| Zeit (min) | Zeolith-Tablette (ppm $PH_3$) | Vergleichstablette (ppm $PH_3$) |
|---|---|---|
| 0 | 0 | 0 |
| 5 | 0 | 2 |
| 10 | 0 | 5 |
| 15 | 0 | 9 |
| 30 | 0 | 22 |
| 60 | 0,3 | 54 |
| 90 | 1,0 | 90 |

Während die Tabletten nach dem Stand der Technik fast sofort merkliche Mengen Phosphin zu bilden begannen, setzte die Phosphinfreisetzung der erfindungsgemäßen Tablette erst nach etwa 1 h ein und war selbst noch nach 1,5 h sehr langsam.

Die Tests wurden bei 95% relativer Luftfeuchtigkeit bei 20°C in der gleichen Kammer von 0,035 $m^3$ wiederholt. Die Ergebnisse sind in Tabelle 3 aufgeführt.

EP 0 342 471 B1

Tabelle 3

| Zeit (min) | Zeolithtablette (ppm $PH_3$) | Vergleichstablette (pm $PH_3$) |
|---|---|---|
| 0 | 0 | 0 |
| 5 | 0 | 14 |
| 10 | 0 | 65 |
| 15 | 0,1 | 96 |
| 30 | 3 | 170 |
| 60 | 41 | 390 |
| 90 | 150 | 520 |

Die erfindungsgemäßen Tabletten wurden in gasdichten Aluminium-Behältern gelagert. Selbst nach 3 Monate langer Lagerung war im Gasraum oberhalb der Tabletten kein freies Phosphingas feststellbar.

Wiederum zeigt es sich, daß die Phosphinfreisetzung aus den erfindungsgemäßen Tabletten erheblich verzögert wird, wobei die Gasfreisetzung nach der Zeitverzögerung mit praktisch normaler Geschwindigkeit verläuft.

Bei der gewerblichen Verwendung können die Tabletten auch in gasdichten rohrförmigen Behältern, wie sie in Fig. 5 dargestellt sind, (siehe auch Beispiel 7) verpackt werden, die sich wiederum in gasdichten Metallbehältern befinden können.

BEISPIEL 3

Magnesiumphosphidtabletten wurden nach dem gleichen Verfahren wie in Beispiel 2 hergestellt, wobei jedoch anstelle des reinen Zeolithen eine Mischung aus 85 Teilchen vom Typ 4A, Na-Form, mit einer Teilchengröße von 2 bis 10 µm, und 15 Teilen Aluminiumstearat zur Bildung des schüsselförmigen Anteils 12 verwendet wurde. 1,5 g paraffinimprägniertes technisches Magnesiumphosphid (3% Paraffin) wurde danach zugegeben, und die Zeolithbedeckung wurde aus einer Mischung von 13X-Zeolith, Na-Form, mit einer Teilchengröße von 30 bis 250 µm, und Aluminiumstearat im Verhältnis von 90:10 gebildet. Die so hergestellten Preßkörper zeigten bei 20°C und 95% bzw. 60% relativer Luftfeuchtigkeit in einer 0,035 m³-Kammer die in Tabelle 4 angegebenen Ergebnisse.

Tabelle 4

| Zeit (min) | 95% rel. Luftfeucht. (ppm $PH_3$) | 60% rel. Luftfeucht. (ppm $PH_3$) |
|---|---|---|
| 0 | 0 | 0 |
| 5 | 0 | 0 |
| 10 | 0 | 0 |
| 15 | 1,2 | 0 |
| 30 | 23 | 0,3 |
| 60 | 220 | 20 |
| 90 | 420 | 150 |

11

EP 0 342 471 B1

BEISPIEL 4

Es wurden Magnesiumphosphidplatten hergestellt, wie sie schematisch in Fig. 4 gezeigt werden.

650 g technisches Magnesiumphosphid einer Teilchengröße von 0,05 bis 0,5 mm wurden homogen mit einem elektrischen Rührer mit 300 g Polyethylenpulver (Fp. 130-140°C) mit einer Teilchengröße von 0,12 bis 0,3 mm, und mit 50 g Zeolith, Typ 13X, Na-form mit einer Teilchengröße von 0,2 bis 1,5 mm, gemischt. 100-g-Chargen der Pulvermischung wurden auf eine Lage Filterpapier mit einem Feuchtigkeitsgehalt von 1,0 bis 2,2% (bestimmt durch 2 h langes Trocknen bei 105°C) gegeben. Die Filterpapierlagen hatten Seitenlängen von 20 x 30 cm und ein Gewicht pro Oberflächeneinheit von 105 g/m². In einem rechteckigen Rahmen wurde die Pulverschicht einheitlich auf eine Fläche von 18 x 28 cm aufgebracht. Die Schicht wurde durch IR-Strahlung auf 150 bis 160°C erhitzt, worauf eine Abdecklage aus Filterpapier der gleichen Größe wie die erste Lage darauf gelegt wurde; dann wurde die Probe mittels einer erhitzten Walze bei einem Druck von 40 N/cm² komprimiert. Die hervorstehenden Papierränder wurden darübergefaltet und durch Schmelzkleben verbunden. Die so gebildete Begasungsplatte hatte eine Dicke von 2,5 mm und war in einen gut passenden Umschlag aus aluminiumbeschichteter Polyethylenfolie eingeschweißt. Das Produkt wird schematisch in Fig. 4 gezeigt; darin ist das Platteninnere mit 15, die obere bzw. untere Lage aus Filterpapier mit 16 bzw. 17 und der gasdichte Umschlag mit 18 bezeichnet.

Das Produkt wurde bei 15 bis 20°C bzw. 60°C gelagert, und die Ergebnisse wurden mit einer ähnlichen, bekannten, kein Zeolith enthaltenden Probe verglichen.

Nach 21-tägiger Lagerung bei 15 bis 20°C betrug der Phosphingehalt in der Gasphase des Umschlags der zeolithenthaltenden Probe 32 ppm und der der bekannten Probe 170 000 ppm.

Eine 21-tägige Lagerung bei 60°C ergab die folgenden Ergebnisse:
$PH_3$-Konzentration in der Gasphase im Umschlag der erfindungsgemäßen Probe = 2,9 ppm, in der bekannten Probe = 223 450 ppm.

Die besonders niedrige Konzentration im Test bei 60°C war nicht vorhersehbar und hatte ihre Ursache in dem bisher nicht bekannten Phänomen der irreversiblen $PH_3$-Absorption durch Zeolithe, die bei relativ hohen Temperaturen noch deutlicher wird. Der resultierende Phosphinverlust von etwa 0,1 bis 0,2% wird allgemein als vernachlässigbar angesehen.

Es war auch nicht zu erwarten, daß die Affinität der Zeolithe für Feuchtigkeit ausreichend hoch sein würde, um beim Herstellungsverfahren die im Produkt eingeschlossene Feuchtigkeit bevorzugt aufzufangen und deren Reaktion mit dem Metallphosphid zu verhindern.

Die Gasbildung mit den erfindungsgemäßen Platten war ähnlich der mit den bekannten Platten. Das zeitweilig durch den Zeolithen durch reversible Adsorption gebundene Phosphin wurde anschließend vollständig an die Luft freigesetzt. Eine Lagerung bei 60°C führte zur irreversiblen Absorption geringer Phosphinmengen (etwa 0,1 bis 0,2%). Ein Gewichtsverhältnis von Magnesiumphosphid zu dem Zeolith z.B. von 1:0,07 ist sehr wirksam.

BEISPIEL 5

Eine bekannte Magnesiumphosphidplatte ohne Zeolithzusätze wurde zusammen mit 2 g Zeolith 3A, K-Na-Pulver, mit einer Teilchengröße von 2 bis 10 $\mu$m, und 3 g 5A, Ca-Na-Zeolith in kugelförmigen Teilchen einer Teilchengröße von 1 bis 4 mm, in den gasdichten Umschlag 18 eingeschweißt und 66 Tage bei 15 bis 20°C gelagert. Nach dieser Zeit betrug die Phosphingaskonzentration im Umschlag 450 ppm, was wesentlich unterhalb der Selbstentzündungskonzentration liegt. Die Analyse des Wassergehalts bzw. Phosphingehalts des Zeolithpulvers und -granulates lieferte die in Tabelle 5 gezeigten Ergebnisse.

12

Tabelle 5

| | Wassergehalt | |
|---|---|---|
| | 0 Tage | 66 Tage |
| 3A-Pulver | 0,45 % | 4,8 % |
| 5A-Granulat | 0,33 % | 1,4 % |

| | PH$_3$ adsorbiert | PH$_3$ irrevers. absorb. |
|---|---|---|
| 3A-Pulver | 13 mg | 4,6 mg |
| 5A-Granulat | 26 mg | 0 mg |

BEISPIEL 6

Gemäß dem Stand der Technik wurden weitere Vergleichsplatten ohne Zeolith hergestellt, unterschiedliche Zeolithmengen wurden jedoch lose vor dem Wärmeverschweißen zusammen mit der Platte in den Umschlag eingebracht und auf Wassergehalt, Gehalt an adsorbiertem Phosphin und Gehalt an irreversibel absorbiertem Phosphin nach der Lagerung untersucht. Die Ergebnisse sind in Tabelle 6 gezeigt.

Tabelle 6

21 Tage Lagerung bei 15-20°C

| Zeolithmenge, 13X, Na-Form, Porendurchmesser 0,9 nm, verwendet pro Platte; g kugelig. Granulat; 1-4 mm Ø | 5 | 10 | 20 |
|---|---|---|---|
| | ohne CO$_2$ | | mit CO$_2$ gesättigt |
| PH$_3$-Konzentr.; Gasphase; ppm | 35 | 14 | 5 |
| adsorb. PH$_3$ Menge/Gesamtmenge an Zeolith; mg | 1,4 | 6,9 | 6,1 |
| irreversibl. absorb. PH$_3$ Menge; mg | 34 | 32 | 27 |
| Wassergehalt vor Verwendung; % | 0,15 | 0,15 | 0,17 |
| Wassergehalt nach Lagerung; % | 0,06 | 0,2 | 0,1 |

Wie ersichtlich, veränderte sich der Wassergehalt des Zeolithen wenig.

BEISPIEL 7

Es wurden Phosphin-Adsorptions-Absortions-Tabletten mit 6 mm Höhe und 19 mm Durchmesser aus 5A-Zeolith, Ca-Na-Form, einer Teilchengröße von 0,02 bis 0,250 mm, und 13X-Zeolith, Na-Form mit etwa der gleichen Teilchengröße im Mengenverhältnis von 35:65 gepreßt.

30 Aluminiumphosphidtabletten üblicher Abmessungen, die jedoch frei von Ammoniumcarbamat oder anderen, ammoniakfreisetzenden Substanzen waren, wurden in ein Aluminiumtablettenröhrchen mit einer oben liegenden Sorptionstablette, wie in Fig. 5 dargestellt, eingefüllt. Das Röhrchen 19 ist mit einem Schraubverschluß 20 gasdicht verschließbar und enthält Metallphosphidtabletten 21, von denen nur 2 gezeigt sind, wobei

13

sich die erfindungsgemäße Sorptionstablette 22 obenauf befindet. Die Zeolithtablette stellt sicher, daß die Gasphase innerhalb des Röhrchens während der Lagerungsdauer praktisch phosphinfrei bleibt.

BEISPIEL 8

Pellets und runde Tabletten wurden aus 5A- und 13X-Zeolithen im Verhältnis 1:1 gepreßt. Diese Preßkörper wurden zu bekannten, aluminiumphosphid- und magnesiumphosphidhaltigen Pellets oder Kugel-Tabletten bekannter Zusammensetzung (jedoch frei von ammoniakfreisetzenden Substanzen) beigemischt und so im Verhältnis von 1:50 in gasdichte Aluminiumbehälter eingefüllt. Selbst nach 3 Monate langer Lagerung bei 50°C wurde keine Selbstentzündung beobachtet. Die Sorptionskörper wurden bei der Anwendung zusammen mit den aktiven Preßkörpern verteilt und enthielten am Ende der Begasungsperiode keine toxischen Rückstände, da sie das während der Lagerung adsorbierte Phosphin wieder freisetzten.

BEISPIEL 9

4A-, 5A-, 13X-Granulate oder Granulatmischungen aus zwei oder mehreren dieser Typen wurden Phosphidpreßlingen, z.B. Pellets, beigemischt, die lose im gleichen Mengenverhältnis wie in Beispiel 8, bei einer Teilchengröße des Zeolithen von 1 bis 5 mm, in gasdichte Behälter gefüllt wurden. Der Zeolith wurde bei der Durchführung der Begasungen zusammen mit den Preßlingen verteilt.

BEISPIEL 10

40 Teile technisches Aluminiumphosphidpulver wurden mit 3 Gew.-% Paraffin überzogen und homogen mit 57 Gew.-Teilen 13X-Zeolith mit einem Porendurchmesser von 0,9 nm (Teilchengröße 0,005 bis 0,200 mm) gemischt und zu Tabletten von 2,6 g gepreßt.

Nach Lagerung in gasdichten Behältern wurde kein Phosphin in der Gasphase gefunden. Die Phosphinbildung der Tabletten in einer 35-l-Kammer bei 21°C und 50% relativer Luftfeuchtigkeit war verzögert, wie in Tabelle 7 gezeigt wird.

Tabelle 7

| Zeit; min | $PH_3$; ppm |
|-----------|-------------|
| 0 | 0 |
| 5 | 0 |
| 10 | 0 |
| 15 | 0,7 |
| 30 | 3,5 |

BEISPIEL 11

14 Teile kugelförmige Granulate aus 13 X-Zeolith, Na-Form, mit einem Porendurchmesser von 0,9 nm und Granulatdurchmesser von 1,5 bis 5 mm, wurden homogen einer Mischung aus 10 Teilen Ammoniumstearat, 3 Teilen Zinkstearat (Teilchengröße der Stearate kleiner als 30 $\mu$m) und 70 Teilen technischem AlP (Teilchengröße 0,2 bis 0,7 mm), die mit 3 Teilen Hart-Paraffin überzogen sind, beigemischt.

34-g-Chargen der Mischung wurden in 11 x 10 cm große Beutel aus PE-Vliesmaterial eingeführt und durch Wärmeverschweißen verschlossen. Diese wurden ihrerseits in gasdichte Umschläge aus Al-PE-Laminatfolie eingeschweißt und bei 25°C gelagert. Nach 3 Monaten betrugen die $PH_3$-Konzentrationen im Gasraum innerhalb der Umschläge weniger als 1 ppm.

Identische Proben wurden mit einer Zusammensetzung der gleichen Zusammensetzung wie oben angegeben, jedoch ohne Zeolith, hergestellt. Nach Lagerung unter den gleichen Bedingungen wie oben betrug die $PH_3$-Konzentration in der Gasphase der Umschläge 12 500 ppm.

14

EP 0 342 471 B1

BEISPIEL 12

Ein Zeolith vom Typ 5A, Ca-Na-Form, mit einem Porendurchmesser von 0,5 nm, einem Feuchtigkeitsgehalt von weniger als 0,5% Wasser, wurde mit Phosphingas beladen, indem dieses durch eine Schüttung des Zeolithen geleitet wurde. Der Zeolith in Granulatform bestand aus Kügelchen von 1 bis 4 mm Durchmesser. Er wurde vollständig beladen und enthielt 9 g Phosphin pro 100 g Zeolith. Dann wurde der Zeolith unter einer Stickstoffatmosphäre in gasdichte Dosen zur Lagerung verpackt.

BEISPIEL 13

Das in Beispiel 12 hergestellte Granulat wurde in einer Einfach-Schichtung in einem zu begasenden Raum bei 22°C und 60% relativer Luftfeuchtigkeit ausgelegt. Nach 19 h war das Phosphin praktisch vollständig desorbiert, wobei der restliche Phosphingehalt im Zeolithen nun nur 0,01% betrug. Kein Rückstand von absorbiertem (d.h. oxidiertem) Phosphin konnte festgestellt werden. Mit diesem relativ groben Granulat wurde keine Selbstentzündung beobachtet.

BEISPIEL 14

Zur schnelleren Phosphinfreisetzung wurde der Zeolith in Pulverform verwendet. In diesem Fall wurde der Kontakt Phosphin wie in Beispiel 12 unterbrochen, als der Zeolith auf höchstens 50% seiner Kapazität beladen war, um während der anschließenden Verwendung die Gefahr einer möglichen Selbstentzündung völlig zu vermeiden.

BEISPIEL 15

150 g 5A-Zeolith, Ca-Na-Form, als kugelförmiges Granulat von 1,5 bis 3 mm Durchmesser, mit einer Schüttdichte von 730 g/dm$^3$, wurden in ein Glasrohr von 3 cm Durchmesser gefüllt.

Kohlendioxid wurde bis zur Sättigung durch das Bett geleitet. Die Sättigungsgrenze ist durch allmähliches Fortschreiten der Erhitzungszone und anschließendem Temperaturabfall feststellbar. 27 g Kohlendioxid wurden adsorbiert. Danach wurde reines Phosphingas bei einer Geschwindigkeit von 2,1 ml/sec durch die Säule geleitet. Nach erreichter Sättigung wurde die Säule kurz mit Stickstoff (3 min lang) gespült. Das Granulat enthielt nun 5,6% Phosphin und 3,4% Kohlendioxid. Die Probe unterlag weder bei Kontakt mit Luft noch mit flüssigem Wasser einer Selbstentzündung.

Das Granulat wurde in gasdichte Stahltrommeln verpackt.

BEISPIEL 16

Das gemäß Beispiel 15 hergestellte Granulat wurde in einer Einfach-Schichtung in einer zu begasenden Umgebung 21°C und einer relativen Luftfeuchtigkeit von 59% ausgesetzt. Nach 20 h enthielt der Zeolith nur noch 0,02% Phosphin und 0,3% Kohlendioxid. Kein irreversibel absorbierter Phosphor war feststellbar.

Der Zeolith wurde zurückgewonnen, bei 400°C getrocknet und erneut wie in Beispiel 15 beladen.

Das mit adsorbiertem Phosphin beladene Zeolithgranulat kann in der Praxis in Beutel oder Bag-blankets eingefüllt werden, wie sie mit Bezug zu Fig. 1 beschrieben sind, und in gasdichten Behältern gelagert werden. Alternativ wird es in rohrförmige Patronen mit Einlaß- und Auslaßanschlüssen an entgegengesetzten Enden gefüllt. Diese werden zur Lagerung in gasdichte Dosen oder Trommeln verpackt.

**Patentansprüche**

1. Verfahren zur Phosphinregelung, z.B. durch Verhütung der Bildung unerwünschter Phosphinkonzentrationen in einem Raum oder einer Umgebung, Verzögerung des Beginns der Phosphinbildung und/oder des Anstiegs der Phosphinkonzentration, wobei das Phosphin von einer phosphinfreisetzenden Zusammensetzung oder Verbindung stammt, die vorzugsweise hydrolysierbare Metallphosphide umfaßt, dadurch gekennzeichnet, daß die phosphinfreisetzende Zusammensetzung oder Verbindung, die von ammoniakfreisetzenden Komponenten praktisch frei ist, mit einem Zeolithen mit einer Porenweite von 0,3 nm aufwärts, vermischt bzw. kombiniert oder in der unmittelbaren Nachbarschaft zu diesem gehalten wird, wobei der Zeolith ein Adsorptionsvermögen für Feuchtigkeit oder Phosphin, vorzugsweise für beides hat, und der Zeolith gegebenenfalls einer anschließenden Stufe der Freisetzung des durch den Zeolithen adsorbierten Phosphins in die Umgebung,

15

die einer Schädlingsbekämpfung unterworfen werden soll, unterzogen wird.

2. Verfahren nach Anspruch 1, dadurch gekennzeichnet, daß zur Adsorption von vorzeitig freigesetztem Phosphin Zeolithe mit einer Porenweite von 0,4, aufwärts verwendet werden.

3. Verfahren nach einem oder beiden der Ansprüche 1 bis 2, dadurch gekennzeichnet, daß der Zeolith zum Verpacken und Lagern von Metallphosphidzusammensetzungen in der Packung mit der Metallphosphidzusammensetzung oder der Metallphosphidverbindung als getrenntes Gut, oder der Metallphosphidzusammensetzung oder Metallphosphidverbindung einverleibt oder als physikalischer Teil derselben verwendet wird.

4. Schädlingsbekämpfungsmittel, enthaltend eine oder mehrere phosphinfreisetztende Verbindungen oder Zusammensetzungen, die vorzugsweise ein hydrolysierbares Metallphosphid und gegebenenfalls übliche Zusätze umfassen, dadurch gekennzeichnet, daß sie von ammoniakfreisetzenden Komponenten praktisch frei ist und Zeolith mit einer Porenweite von 0,3 nm aufwärts, und - falls zur Adsorption von Phosphin beabsichtigt - Porenweiten von 0,4 nm, aufwärts, enthält.

5. Schädlingsbekämpfungsmittel nach Anspruch 4, dadurch gekennzeichnet, daß der Zeolith der phosphinfreisetzenden Verbindung oder Zusammensetzung einverleibt oder ein physikalischer Teil derselben, dargestellt, und zwar vorzugsweise in einem Gewichtsverhältnis von Metallphosphid zu Zeolith von 1:0,05 bis 1:2, oder als Überzug vorliegt, der einen Preßkörper, der phosphinfreisetzenden Verbindung oder Zusammensetzung einhüllt.

6. Schädlingsbekämpfungsmittel nach einem oder beiden der Ansprüche 4 bis 5, dadurch gekennzeichnet, daß es in Form von gepreßten Tabletten oder Pellets vorliegt, die einen Kern aus komprimierter phosphinfreisetzender Verbindung oder Zusammensetzung umfassen, wobei der Kern mit einem Überzug aus komprimiertem Zeolithen, gegebenenfalls kombiniert mit Zusätzen, wie Bindemittel, Tablettierhilfen, Mittel zum Wasserabstoßendmachen und Mittel zur Verhütung einer Selbstentzündung umhüllt ist.

7. Die Verwendung eines mit Phosphin reversibel beladenen Zeolithen, mit einer Porengröße von 0,4 nm oder mehr, zur Bekämpfung von Schädlingen.

8. Die Verwendung nach Anspruch 7, worin der Zeolith in Pulver- oder Granulatform, vorliegt und mit nicht mehr als 70 Gew.%, seiner maximalen Adsorptionskapazität für Phosphingas, beladen ist.

9. Die Verwendung nach einem oder beiden der Ansprüche 7 bis 8, dadurch gekennzeichnet, daß der Zeolith nur teilweise mit Phosphingas und teilweise mit Kohlendioxid, beladen ist.

10. Die Verwendung nach einem oder mehreren der Ansprüche 7 bis 9, dadurch gekennzeichnet, daß der Zeolith bzw. das Zeolithpräparat in gasdurchlässigen Anwendungsvorrichtungen, die vorzugsweise wiederverwendbar sind, hergestellt aus gasdurchlässigem Papier oder Kunststoffgewebe oder nicht-gewebten Faser-Stoffen, verpackt ist.

11. Aufnahmemittel für eine phosphinfreisetzende Verbindung oder Zusammensetzung, die vorzugsweise hydrolysierbare Metallphosphide umfaßt und von ammoniakfreisetzenden Komponenten praktisch frei ist, dadurch gekennzeichnet, daß es die in unmittelbarer Nähe der Verbindung oder Zusammensetzung einen Zeolithen mit einer Porenweite von 0,3 nm aufwärts, und mit einem Adsorptionsvermögen für Feuchtigkeit oder Phosphin oder vorzugsweise für beides, enthält.

## Claims

1. Process for phosphine regulation, e.g. by preventing the formation of undesired phosphine concentrations in a room or environment, by delaying the onset of the phosphine formation and/or the increase of the phosphine concentration, the phosphine resulting from a phosphine liberating composition or compound which preferably comprises hydrolysable metal phosphides, characterized in that the phosphine liberating composition or compound which is essentially free from ammonia liberating components is blended or combined with a zeolite having a pore size of 0.3 nm and above or kept closely adjacent thereto, the zeolite having an adsorption capacity for moisture or phosphine, preferably for both, and that the zeolite, if desired, is subjected to a subsequent step of liberating the phosphine adsorbed by it into the surrounding which is to be subjected to a pest control treatment.

2. Process according to claim 1, characterized in that zeolites having a pore size of 0.4 nm and above are used to adsorb prematurely liberated phosphine.

3. Process according to one or both of claims 1 to 2, characterized in that the zeolite is used for packing and storing metal phosphide compositions in one package together with the metal phosphide composition or the metal phosphide compound as a separate good or incorporated into the metal phosphide compositon or metal phosphide compound,or is used as a physical part thereof.

4. Pesticidal agents, containing one or more phosphine liberating compounds or compositions which preferably contain a hydrolysable metal phosphide and, if desired, usual additives, characterized in that they are essentially free from ammonia liberating components and contain a zeolite having a pore size of 0.3 nm and above and - if intended for the adsorption of phosphine - pore sizes of 0.4 nm and above.

5. Pesticidal agent according to claim 4, characterized in that the zeolite is incorporated into the phosphine liberating compound or composition or is a physical part thereof, preferably in a weight ratio of metal phosphide to zeolite of 1:0.05 to 1:2, or is present as a coating which encases a compression molded structure of the phosphine liberating compound or composition.

6. Pesticidal agent according to one of both of claims 4 and 5, characterized in that it is present in the form of press-molded tablets or pellets comprising a core of a compressed phosphine liberating compound or composition, said core being encased by a coating of compressed zeolite, if desired in combination with additives, such as binders, pelleting aids, water repelling agents and agents to prevent a self-ignition.

7. The use of a zeolite which is reversibly loaded with phosphine and has a pore size of 0.4 nm or more for pest control.

8. The use according to claim 7, wherein the zeolite is present in powder or granular form and is loaded to not more than 70 weight% of its maximum adsorption capacity for phosphine gas.

9. The use according to one or both of claims 7 to 8, characterized in that the zeolite is partly loaded with phosphine gas and partly with carbon dioxide.

10. The use according to one or more of claims 7 to 9, characterized in that the zeolite or the zeolite preparation is placed into gas permeable application devices which are preferably reusable, prepared from gas permeable paper or plastic fabric or non-woven fiber material.

11. Means to contain a phosphine liberating compound or composition which preferably comprises hydrolysable metal phosphides and is essentially free from ammonia liberating components, characterized in that said means contains immediately adjacent to the compound or composition a zeolite having a pore size of 0.3 nm and above and an adsorption capacity for moisture and phosphine or preferably for both.

**Revendications**

1. Procédé pour la régulation de la phosphine, par exemple par empêchement de la formation de concentrations indésirables de phosphine dans un espace ou dans un environnement, ralentissement du début de la formation de phosphine et/ou de l'augmentation de la concentration de phosphine, la phosphine provenant d'un composé ou d'une composition libérant de la phosphine, qui comprend de préférence des phosphures métalliques hydrolysables, caractérisé en ce que l'on mélange ou combine le composé ou la composition libérant de la phosphine, qui sont pratiquement exempts de composants libérant de l'ammoniac, avec une zéolite ayant une largeur de pores de 0,3 nm ou plus, ou en ce qu'on les maintient au voisinage immédiat de celle-ci, la zéolite ayant un pouvoir d'adsorption d'humidité ou de phosphine, de préférence des deux, et on soumet éventuellement la zéolite à une étape subséquente de libération de la phosphine, adsorbée par la zéolite, dans l'environnement qui doit être soumis à une lutte contre les parasites.

2. Procédé selon la revendication 1, caractérisé en ce que, pour l'adsorption de phosphine libérée prématurément, on utilise des zéolites ayant une largeur de pores de 0,4 nm et plus.

3. Procédé selon la revendication 1 ou 2 ou les deux, caractérisé en ce que, pour le conditionnement et le stockage de compositions de phosphures métalliques, on utilise la zéolite dans l'emballage avec la composition de phosphures métalliques ou le composé de type phosphure métallique sous forme de produit séparé, ou incorporée à la composition de phosphures métalliques ou au composé de type phosphure métallique, ou sous forme de partie physique de ceux-ci.

4. Pesticide contenant un ou plusieurs composés ou une ou plusieurs compositions libérant de la phosphine, qui comprennent de préférence un phosphure métallique hydrolysable et éventuellement des additifs usuels, caractérisé en ce qu'il est pratiquement exempt de composants libérant de l'ammoniac et contient une zéolite ayant une largeur de pores de 0,3 nm et plus, et - si elle est envisagée pour l'adsorption de phosphine - des largeurs de pores de 0,4 nm et plus.

5. Pesticide selon la revendication 4, caractérisé en ce que la zéolite est incorporée au composé ou à la composition libérant de la phosphine ou représente une partie physique de ceux-ci, à savoir se trouve de préférence en un rapport pondéral du phosphure métallique à la zéolite allant de 1:0,05 à 1:2, ou se trouve sous forme de revêtement qui enrobe un corps comprimé du composé ou de la composition libérant de la phosphine.

6. Pesticide selon la revendication 4 ou 5 ou les deux, caractérisé en ce qu'il se trouve sous forme de granules ou comprimés tassés, qui comprennent un noyau à base de composé ou de composition comprimés, libérant de la phosphine, le noyau étant enrobé avec un enrobage de zéolite comprimée, éventuellement associé à des additifs tels que liants, auxiliaires de fabrication de comprimés, agents d'hydrophobie et agents pour empêcher une auto-inflammation.

7. Utilisation d'une zéolite chargée réversiblement de phosphine, ayant une taille de pores de 0,4 nm ou plus, pour la lutte contre des parasites.

8. Utilisation selon la revendication 7, dans laquelle la zéolite se trouve sous forme de poudre ou de produit granulé et est chargée avec pas plus de 70 % en poids de sa capacité maximale d'adsorption pour la phosphine gazeuse.

9. Utilisation selon la revendication 7 ou 8 ou les deux, caractérisée en ce que la zéolite n'est chargée que partiellement avec de la phosphine gazeuse et partiellement avec du dioxyde de carbone.

10. Utilisation selon une ou plusieurs des revendications 7 à 9, caractérisée en ce que la zéolite ou la composition de zéolite est conditionnée dans des dispositifs d'utilisation perméables au gaz, qui sont de préférence réutilisables, fabriqués à partir de papier perméable au gaz ou de tissu synthétique ou de matières fibreuses non tissées.

11. Récepteur pour un composé ou une composition libérant de la phosphine, qui comprennent de préférence des phosphures métalliques hydrolysables et sont pratiquement exempts de composants libérant de l'ammoniac, caractérisé en ce qu'il contient, au voisinage immédiat du composé ou de la composition, une zéolite ayant une largeur de pores de 0,3 nm et plus, et ayant un pouvoir d'adsorption d'humidité ou de phosphine ou de préférence des deux.

FIG. 1

FIG. 2.

FIG. 4

FIG. 3

FIG. 5